# EUROPÄISCHE PATENTANMELDUNG

(11) **EP 4 234 427 A2**
(43) Veröffentlichungstag der Anmeldung: **30.08.2023**
(21) Anmeldenummer: 23177408.4
(22) Anmeldetag: 28.10.2021
(51) Int. Cl.: B65D 43/02

(54) **VERPACKUNGSANORDNUNG FÜR TIERFUTTER, TIERFUTTERPRODUKT SOWIE VERFAHREN ZUR HALTBARMACHUNG UND AUFBEWAHRUNG**

(30) Priorität: 29.10.2020 DE 102020128467
(62) Teilanmeldung aus: 21205315.1
(71) Anmelder: FRESCO Dog Foods GmbH, 44536 Lünen (DE)
(72) Erfinder: Hauf, Reiner, 44536 Lünen (DE)
(74) Vertreter: Träm, Philippe

(57) **Zusammenfassung**

Die vorliegende Erfindung betrifft ein Verfahren zur Haltbarmachung und Aufbewahrung von Tierfutter (11), bei dem dieses einer Hochdruckbehandlung in einer inneren Verpackung (10) in Form einer Wursthülle (2) unterzogen wird, dadurch gekennzeichnet, dass die innere Verpackung (10) eine Verbundfolie (3) umfasst, wobei die Verbundfolie (3) wenigstens zwei Folien aus unterschiedlichen Materialien aufweist.

## Beschreibung

Die vorliegende Erfindung betrifft ein Verfahren zur Haltbarmachung und Aufbewahrung von Tierfutter, bei dem das Tierfutter einer Hochdruckbehandlung unterzogen wird.

Bei der Haltbarmachung von verpackten Lebensmitteln durch Hochdruckbehandlung werden die Lebensmittel in der Regel vorzugsweise in einer Verpackung, die gegebenenfalls mit einem Schutzgas gefüllt sein kann, in eine Hochdruckkammer gebracht und dort mit einem Hochdruckmedium, in der Regel Wasser, bei einem hohen Druck von beispielsweise mehreren 1000 bar behandelt. Durch den hohen Druck dringt dabei insbesondere das Schutzgas in das Lebensmittel ein, wodurch schädliche Mikroorganismen im Lebensmittel zerstört und abgetötet werden. Kleinere Moleküle wie Vitamine, Aromastoffe und dergleichen werden hingegen insbesondere durch die Hochdruckbehandlung kaum beeinträchtigt. Dadurch bleiben vorzugsweise bei diesem Verfahren der Geschmack und die Vitamine des Lebensmittels erhalten. Daher kann die Hochdruckbehandlung der herkömmlichen Hitzebehandlung zur Pasteurisierung von Lebensmitteln überlegen sein.

Nachteilig kann allerdings sein, dass es bei der Hochdruckbehandlung zu Problemen mit der Verpackung kommen kann, da beispielsweise bei der Druckabsenkung nach der Behandlung die zuvor bei hohem Druck verflüssigten Gase in der Verpackung plötzlich verdampfen und dadurch die Verpackung beschädigt werden kann. Daher muss der Druckabbau insbesondere geregelt und langsam erfolgen, um zu verhindern, dass Schäden an der Verpackung auftreten. Verfahren zur Hochdruckpasteurisierung (HPP) können für die Haltbarmachung von Tiernahrung nur begrenzt angewandt werden. Biologisch artgerechtes rohes Futter (BARF) gelangt daher bislang insbesondere nur tiefgekühlt in den Handel und ist dann nach dem Auftauen nur für eine begrenzte Zeitdauer haltbar. Bei biologisch artgerechtem rohem Futter für Hunde handelt es sich beispielsweise um rohes Fleisch mit Knochen.

Die Aufgabe der vorliegenden Erfindung besteht darin, ein Verfahren zur Haltbarmachung von Tierfutter zur Verfügung zu stellen, um die Nachteile im Stand der Technik auszuräumen oder zu vermindern. Insbesondere werden eine effektivere Haltbarmachung und eine praxisgerechte und längere Aufbewahrung nach dem Auftauen und Öffnen der Verpackung ermöglicht.

Die Lösung dieser Aufgabe liefert ein Verfahren zur Haltbarmachung und Aufbewahrung von Tierfutter mit den Merkmalen des Anspruchs 1.

Gegenstand der vorliegenden Erfindung ist ein Verfahren zur Haltbarmachung und Aufbewahrung von Tierfutter, bei dem dieses einer Hochdruckbehandlung in einer inneren Verpackung in Form einer Wursthülle unterzogen wird, dadurch gekennzeichnet, dass die innere Verpackung eine Verbundfolie umfasst, wobei die Verbundfolie wenigstens zwei Folien aus unterschiedlichen Materialien aufweist. In anderen Worten ist ferner Gegenstand der Erfindung ein Verfahren insbesondere für eine Haltbarmachung und Aufbewahrung von Tierfutter, bei dem dieses insbesondere einer Hochdruckbehandlung, bzw. Hochdruckpasteurisierung (HPP) in einer inneren Verpackung in Form einer Wursthülle unterzogen wird, wobei erfindungsgemäß die innere Verpackung eine Verbundfolie aus wenigstens zwei unterschiedlichen Kunststofffolien umfassen kann. Die Hochdruckbehandlung erfolgt insbesondere zur Pasteurisierung und somit Haltbarmachung des Tierfutters und kann in an sich bekannter Weise erfolgen, indem das in Kunststofffolie eingeschweißte Tierfutter, welche der erfindungsgemäßen inneren Verpackung entsprechen kann, in einem Wasserbad einem hohen Druck ausgesetzt wird. Bei der Hochdruckbehandlung kann es sich somit um eine Hochdruckpasteurisierung (HPP) handeln. Das Tierfutter kann in dem Verpackungsbeutel, bzw. der erfindungsgemäßen inneren Verpackung, gegebenenfalls in einer Schutzgasatmosphäre oder unter Vakuum eingeschweißt sein. Es kann beispielsweise in tiefgekühltem Zustand in den Handel gelangen, wobei der Tiefkühlvorgang nach der Hochdruckbehandlung erfolgt. Der Verbraucher kann dann beispielsweise später den Verpackungsbeutel, welcher der erfindungsgemäßen inneren Verpackung entsprechen kann, mit dem darin eingeschweißten Tierfutter in einen starren Behälter, welcher der erfindungsgemäßen äußeren Verpackung entsprechen kann, einbringen. Wenn dann das Tierfutter aufgetaut wurde und Portionen entnommen wurden, lässt sich das Tierfutter insbesondere besser aufbewahren, wobei es besonders vorteilhaft sein kann, wenn der äußere starre Behälter, bzw. die äußere Verpackung, über einen Deckel oder dergleichen nach Entnahme von Tierfutter stets wieder verschließbar ist.

Gemäß einer bevorzugten Weiterbildung des erfindungsgemäßen Verfahrens umfasst die Verbundfolie wenigstens eine Folie aus Polyamid und wenigstens eine Folie aus Polyethylen. Diese Materialkombination von Kunststofffolien kann für die Hochdruck, bzw. HPP-Behandlung besonders geeignet sein, da sie insbesondere eine hohe Widerstandsfähigkeit und Reißfestigkeit bei hohem Druck mit sich bringt.

Gemäß einer bevorzugten Weiterbildung des erfindungsgemäßen Verfahrens wird das Tierfutter insbesondere in frischem Zustand der Hochdruckbehandlung unterzogen und anschließend bevorzugt tiefgefroren, bzw. tiefgekühlt. Der "frische" Zustand beschreibt insbesondere den Zustand des Tierfutters kurz nach der Herstellung. Das Tierfutter kann dort bei Raumtemperatur vorliegen.

Gemäß einer bevorzugten Weiterbildung des erfindungsgemäßen Verfahrens wird vorzugsweise die innere Verpackung in einen starren Behälter eingelegt, der als äußere Verpackung dient und die gefüllte innere Verpackung etwa passend, insbesondere formschlüssig, aufnimmt. Das Einlegen der beutelartigen inneren Verpackung kann entweder später beim Verbraucher erfolgen, oder aber auch bereits beim Hersteller, so dass das Tierfutter bereits in dem äußeren starren Behälter, bzw. der äußeren Verpackung, in den Handel gelangt.

Gemäß einer bevorzugten Weiterbildung des erfindungsgemäßen Verfahrens weist der als äußere Verpackung dienende starre Behälter insbesondere einen Deckel, vorzugsweise einen Schraubdeckel, auf, um die äußere Verpackung mit dem Deckel reversibel, vorzugsweise luftdicht, zu verschließen. In anderen Worten ist der als äußere Verpackung dienende starre Behälter insbesondere mittels eines Deckels, vorzugsweise mittels eines Schraubdeckels, verschließbar.

Gemäß einer bevorzugten Weiterbildung des erfindungsgemäßen Verfahrens kann die innere Verpackung vor oder nach dem Auftauen und insbesondere nach dem Anbruch in der äußeren Verpackung aufbewahrt werden. Anders ausgedrückt wird die innere Verpackung insbesondere vor oder nach dem Auftauen und insbesondere nach dem Anbruch der inneren Verpackung in den starren äußeren Behälter eingelegt.

Gemäß einer bevorzugten Weiterbildung kann das erfindungsgemäße Verfahren insbesondere für biologisch artgerechtes Hundefutter angewandt werden, welches Fleisch und Knochen enthält oder umfasst. Dieses biologisch artgerechte rohe Hundefutter kann auch abgekürzt als BARF bezeichnet werden.

Eine Verpackungsanordnung, insbesondere Verpackung, für Tierfutter, umfasst
- eine Wursthülle zur luftdicht verschlossenen Aufnahme des Tierfutters aus einem Kunstdarm als eine innere Verpackung, wobei vorzugsweise die Wursthülle als eine das Tierfutter aufnehmende luftdicht verschlossene Wursthülle ausgebildet ist,
- einen starren Behälter als eine äußere Verpackung, welcher einen Deckel aufweist und die als innere Verpackung dienende Wursthülle aufnimmt.

In anderen Worten ist insbesondere vorgesehen, dass eine Verpackung bzw. Verpackungsanordnung für Tierfutter eine das Tierfutter aufnehmende luftdicht verschlossene Wursthülle aus einem Kunstdarm als innere Verpackung umfasst sowie einen vorzugsweise über einen Deckel verschließbaren starren Behälter als äußere Verpackung, welcher die als innere Verpackung dienende Wursthülle aufnimmt. Es ist somit insbesondere quasi eine doppelte Verpackung vorgesehen. Das Tierfutter wird vorzugsweise in eine Art Wursthülle eingebracht, die als Verpackung für die Hochdruckbehandlung dient. Das so verpackte Tierfutter kann in der inneren Verpackung insbesondere im frischen Zustand mittels Hochdruck behandelt und pasteurisiert werden. Nach der Hochdruckbehandlung kann das Tierfutter gegebenenfalls tiefgefroren werden und in dieser Form kann das Tierfutter nach der Hochdruckbehandlung in den Handel gelangen.

Die Verpackungsanordnung kann es ferner ermöglichen, dass das Tierfutter ungefroren bspw. im Kühlschrank gelagert wird. So kann die innere Verpackung dazu ausgeführt sein, ein Verfahren zur Hochdruckpasteurisierung (HPP) an dem Tierfutter, welches darin aufgenommen ist, zu ermöglichen. Das in der inneren Verpackung verpackte Tierfutter kann z.B. dadurch der Hochdruckbehandlung unterzogen werden, dass die innere Verpackung mit einem Schutzgas gefüllt wird und mit dem darin verpackten Tierfutter in eine Hochdruckkammer gebracht und dort mit einem Hochdruckmedium, bspw. Wasser, bei einem hohen Druck von beispielsweise mehreren 1000 bar behandelt wird. Durch den hohen Druck kann dabei das Schutzgas in das Tierfutter eindringen, wodurch schädliche Mikroorganismen im Tierfutter zerstört und abgetötet werden.

Ferner kann die Aufbewahrung im Kühlschrank dadurch ermöglicht werden, dass die äußere Verpackung als Lagerungsmittel ausgebildet ist. Darunter ist zu verstehen, dass die äußere Verpackung eine Lagerung, insbesondere ein Aufstellen, der Verpackungsanordnung im Kühlschrank ermöglicht. In anderen Worten kann die äußere Verpackung als ein Gestell der Verpackungsanordnung bezeichnet werden. Die Lagerung kann bspw. dadurch ermöglicht werden, dass die äußere Verpackung eine flache Unterseite aufweist, welche im Gegensatz zur ggf. gewölbten Unterseite der inneren Verpackung das Aufstellen auf einem Fachboden oder Gitter des Kühlschranks ermöglicht. Hierzu ist die äußere Verpackung bspw. als Dose oder Kasten oder dergleichen ausgebildet. Die innere Verpackung kann derart geformt sein, z. B. mit einem gewölbten Boden, dass ein Aufstellen des Bodens der inneren Verpackung auf einer Ebene nicht möglich ist. Dagegen kann die äußere Verpackung derart geformt sein, bspw. durch einen flachen Boden, dass das Aufstellen des Bodens der äußeren Verpackung auf einer Ebene ermöglicht wird. Unter dem Aufstellen wird hierbei insbesondere verstanden, dass die Verpackung ihrer Länge nach vertikal ausgerichtet wird, also die kürzere Seite der Verpackung, d.h. der Boden, flach auf einer waagerechten Ebene aufliegt.

### Begrifflich sei noch folgendes erläutert:

Im Rahmen der Erfindung sind unbestimmte und bestimmte Artikel oder Zahlenangaben, also z. B. "ein", "zwei", usw.", stets als "mindestens"-Angaben zu verstehen, sofern nicht ausdrücklich etwas anderes angegeben ist. Weiterhin sind Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe von "wenigstens" oder "mindestens" o.ä. darf nicht geschlossen werden, dass durch die einfache Verwendung des Artikels oder der Zahlenangabe, also ohne die Angabe von "wenigstens" o.ä., eine Einschränkung z. B. im Sinne von "genau ein" impliziert werden soll.

Eine Verpackungsanordnung bezeichnet im Rahmen der Erfindung insbesondere eine Anordnung von mehreren einzelnen Verpackungen. In anderen Worten kann die Verpackungsanordnung als modulares Verpackungssystem verstanden werden. Der Begriff "Wursthülle" kann als Hülle, insbesondere für Tierfutter, in Form einer Wurst verstanden werden. Wenn es auf die konkrete Form nicht ankommt, kann die Wursthülle im Rahmen dieser Erfindung auch allgemeiner als Tierfutterhülle vorliegen. Das Merkmal, dass die Wursthülle "luftdicht" vorliegt, kann beschreiben, dass die innere Verpackung im Rahmen der Herstellung, vorzugsweise an beiden Enden, luftdicht verschlossen wurde. Dies wird beispielsweise mit einem Clip durchgeführt. Das Tierfutter kann ferner in dem Verpackungsbeutel gegebenenfalls in einer Schutzgasatmosphäre oder unter Vakuum eingeschweißt sein. Der Begriff "Kunstdarm" bezeichnet im Rahmen der Erfindung insbesondere einen Ersatz für einen Naturdarm, welcher vorzugsweise überwiegend Kunststoff aufweist. Der Begriff "starrer Behälter" beschreibt insbesondere, dass nur eine eingeschränkte Beweglichkeit und Elastizität und damit eine Formstabilität vorliegt, wie dies beispielsweise bei Hartplastik wie Duroplasten der Fall sein kann. Der Begriff "Behälter" kann im Rahmen der Erfindung synonym mit dem Begriff "Verpackung" verwendet werden. Die Begriffe "innere Verpackung" und "äußere Verpackung" beziehen sich insbesondere auf die Verpackungsanordnung, sodass vorzugsweise die innere Verpackung im Inneren der Verpackungsanordnung angeordnet ist und die äußere Verpackung die innere Verpackung umschließt. Der Deckel kann eine Komponente der äußeren Verpackung sein und dazu ausgebildet sein, diese zu verschließen.

Wenn herkömmliches Tierfutter beim Verbraucher aufgetaut wurde, bestand bislang insbesondere das Problem, dass es sich trotz der Pasteurisierung im aufgetauten Zustand nur sehr kurz aufbewahren ließ. Durch die zuvor beschriebene Hochdruckbehandlung kann das Tierfutter zwar im Handel und beim Verbraucher länger aufbewahrt werden. Wenn das Tierfutter vom Verbraucher jedoch aufgetaut und die Verpackung angebrochen wurde, das heißt wenn die innere Verpackung geöffnet wurde, ist es bislang aus hygienischen Gründen insbesondere problematisch, die angebrochene Verpackung in einem Kühlschrank unterzubringen, insbesondere da es sich in den meisten Fällen um einen Kühlschrank handelt, den der Verbraucher auch für die Kühlung der eigenen Lebensmittel verwendet. Hier kann die vorliegende Erfindung einen erheblichen Vorteil schaffen, da der Verbraucher nunmehr die innere Verpackung in den starren Behälter, bzw. in die äußere Verpackung, einbringen kann, der als äußere Verpackung dient. Dieser starre äußere Behälter, bzw. die äußere Verpackung ist vorzugsweise verschließbar, sodass insbesondere eine hygienische Aufbewahrung in einem Kühlschrank möglich ist, in dem auch Lebensmittel aufbewahrt werden.

Es kann vorgesehen sein, dass die innere Verpackung insbesondere eine Verbundfolie umfasst, welche vorzugsweise mindestens eine Polyamidfolie und mindestens eine Polyethylenfolie umfasst. Bislang war insbesondere die Hochdruck-, bzw. HPP-Behandlung von tiefgekühltem Tierfutter kritisch, da mit den üblichen Verpackungen, die bei der Hochdruck-, bzw. HPP-Behandlung für Lebensmittel verwendet werden, keine befriedigenden Ergebnisse erzielt werden konnten. Durch umfangreiche Versuche im Rahmen der vorliegenden Erfindung konnte die Anmelderin nun feststellen, dass insbesondere bei der Verwendung von Verbundfolien für die innere Verpackung, die bei der Hochdruck-, bzw. HPP-Behandlung eingesetzt wird, eine gute Haltbarkeit erzielt werden kann und bei der Behandlung mit hohen Drücken insbesondere auch keine Schäden an der Verpackung auftreten. Als besonders geeignet können sich dabei Verbundfolien aus mindestens einer Polyamidfolie und mindestens einer Polyethylenfolie erweisen. Man kann somit Verpackungsbeutel aus derartigen Verbundfolien verwenden, in die man das Tierfutter bei der Hochdruck-, bzw. HPP-Behandlung einschweißt.

Gemäß einer bevorzugten Weiterbildung ist die äußere Verpackung insbesondere als zylindrischer Behälter ausgebildet, um die gefüllte innere Verpackung formschlüssig aufzunehmen. In anderen Worten ist die die äußere Verpackung insbesondere als etwa zylindrischer dosenartiger Behälter ausgebildet, welcher die gefüllte innere Verpackung vorzugsweise etwa passend aufnimmt. Die Begriffe "formschlüssig" und "etwa passend" können im Rahmen der Erfindung synonym verstanden werden und beschreiben insbesondere, dass das Volumen der inneren Verpackung in gefülltem Zustand zu mindestens 80% dem Volumen der äußeren Verpackung entspricht, sodass die innere Verpackung mit möglichst geringem nicht ausgefülltem Raum in der äußeren Verpackung platziert werden kann. Der Verpackungsbeutel, bzw. die innere Verpackung, aus vorzugsweise Verbundfolie der vorgenannten Art, in dem sich vorzugsweise das, insbesondere tiefgekühlte, Tierfutter befindet, kann in den vorzugsweise zylindrischen dosenartigen Behälter, bzw. in die äußere Verpackung, eingebracht und in dieser Form beispielsweise in einem Kühlschrank aufbewahrt werden.

Gemäß einer bevorzugten Weiterbildung ist der Deckel als ein Schraubdeckel ausgebildet, um die äußere Verpackung mit dem Deckel reversibel, vorzugsweise luftdicht, zu verschließen. In anderen Worten ist die äußere Verpackung insbesondere mittels eines Schraubdeckels verschließbar. Nachdem der als innere Verpackung dienende Verpackungsbeutel in den dosenartigen Behälter, welcher als äußere Verpackung dient, eingebracht wurde, kann der Verbraucher diesen Behälter, bzw. die äußere Verpackung, verschließen und hat damit insbesondere eine allseits geschlossene Verpackung, so dass vorzugsweise eine hygienische Aufbewahrung in einem Kühlschrank möglich ist, in dem ansonsten auch Lebensmittel aufbewahrt werden können. Dieser als äußere Verpackung verwendete dosenartige Behälter hat insbesondere den Vorteil, dass man darin das Tierfutter auch nach dem Anbruch des Verpackungsbeutels länger aufbewahren kann, indem man vorzugsweise jeweils nach der Entnahme den Behälter, bzw. die äußere Verpackung, mittels des Schraubdeckels wieder verschließt. Auf diese Weise kann man das Tierfutter portionsweise über einen längeren Zeitraum verbrauchen, auch nachdem es aufgetaut wurde. Der Begriff "reversibel" beschreibt im Rahmen der Erfindung insbesondere, dass der Deckel ohne Beschädigung und ohne Zuhilfenahme von Werkzeug von einem Benutzer beliebig oft geöffnet und wieder verschlossen werden kann. Der luftdichte Verschluss ist beispielsweise durch einen Dichtungsring oder eine sonstige Dichtungsvorrichtung bereitgestellt. Wenn ein Schraubdeckel vorgesehen ist, kann die äußere Verpackung ein dem Schraubdeckel entsprechendes Außengewinde aufweisen, um die äußere Verpackung über das Außengewinde mit dem Schraubdeckel zu verschließen. Ferner ist auch ein Clip-Verschluss, wie beispielsweise bei Vorratsdosen mit Frischhalteverschluss vorgesehen ist, möglich.

Gemäß einer bevorzugten Weiterbildung umfasst die äußere Verpackung insbesondere einen starren Behälter aus einem polymeren Kunststoff, vorzugsweise aus Polypropylen oder Polyethylen. Die genannten Kunststoffe eignen sich insbesondere für eine hygienische Unterbringung des Tierfutters vor und auch nach dem Anbruch der beutelartigen, inneren Verpackung. Der starre Behälter, bzw. die äußere Verpackung, hat insbesondere den Vorteil, dass er ausreichend formstabil ist und sich auf diese Weise vorzugsweise auch größere Verpackungsbeutel gut lagern lassen. Nach dem Auftauen des Tierfutters hätte dieses insbesondere, wenn es nur von der beutelartigen inneren Verpackung umhüllt wäre, für sich allein keine Formstabilität. Dieses Problem wird insbesondere durch den starren dosenartigen äußeren Behälter, bzw. die äußere Verpackung, überwunden. Ein beispielsweise langgestreckter Verpackungsbeutel mit Tierfutter kann nun in einen etwa zylindrischen Behälter etwa gleicher Größe geschoben werden, in den er vorzugsweise so hineinpasst, dass in dem äußeren Behälter wenig Freiraum verbleibt, was mit den Begriffen "formschlüssig" oder "etwa passend" beschrieben werden kann. Der starre dosenartige äußere Behälter, bzw. die äußere Verpackung, kann einen Behälterboden haben und daher standfest sein, so dass man ihn einfach in einen Kühlschrank stellen kann.

Die in dem inneren Verpackungsbeutel untergebrachte Tierfuttermenge kann eine langgestreckte Form (ähnlich einer Wurst) aufweisen, wobei der Durchmesser größer sein kann als bei herkömmlichen Futterverpackungseinheiten.

Nachfolgend wird die vorliegende Erfindung anhand von Ausführungsbeispielen unter Bezugnahme auf die beiliegenden Zeichnungen näher erläutert. Dabei zeigen:
- Figur 1: eine Ansicht des in den als innere Verpackung dienenden Beutel eingeschweißten Tierfutters.
- Figur 2: eine Ansicht perspektivisch von oben auf eine erfindungsgemäße Verpackungsanordnung ohne Deckel und mit Tierfutter.
- Figur 3: eine perspektivische Ansicht eines Tierfutterprodukts mit einer Verpackungsanordnung mit einer über einen Deckel verschlossenen, starren, äußeren Verpackung.
- Figur 4: eine schematische Darstellung einer Wursthülle, welche ein Tierfutter umfasst.
- Figur 5: eine schematische Darstellung eines beispielhaften Verfahrensablaufs.

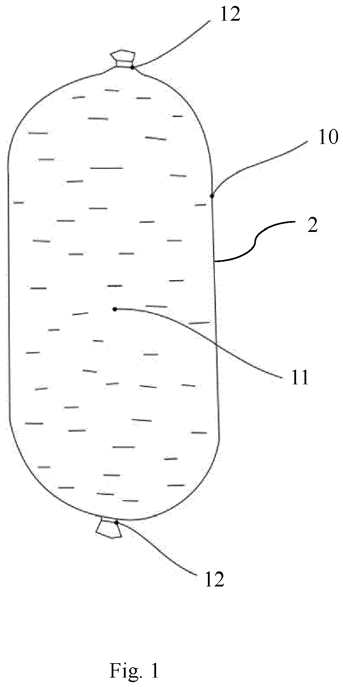

Nachfolgend wird zunächst unter Bezugnahme auf die Figur 1 ein Ausführungsbeispiel näher erläutert. Die Zeichnung zeigt eine Ansicht eines in eine beutelartige innere Verpackung 10 eingeschweißten Tierfutters 11. Das Tierfutter 11 kann biologisch artgerechtes rohes Futter (BARF) beispielsweise für Hunde sein, welches aus rohem Fleisch 5 und Knochen 6 besteht. In der beutelartigen Verpackung 10 kann das Tierfutter 11 mittels Hochdruckbehandlung, bzw. Hochdruckpasteurisierung (HPP) haltbar gemacht werden. Dazu kann der hierin auch als innere Verpackung 10 bezeichnete Beutel beispielsweise eine Verbundfolie 3, umfassend mindestens eine Polyamidfolie und mindestens eine Polyethylenfolie, umfassen. Diese beutelartige innere Verpackung 10 aus der Verbundfolie 3 schließt das Tierfutter 11 insbesondere wie eine Wursthülle 2 ein, sodass das Tierfutter 11 in der inneren Verpackung aus der Verbundfolie 3 eng umschlossen und luftdicht eingehüllt ist. Man sieht in Figur 1, dass die beutelartige innere Verpackung 10 eine längliche, etwa zylindrische und in den Endbereichen etwas abgerundete Form aufweisen und an den beiden Enden jeweils über klammerartige Befestigungselemente 12 verschlossen sein kann, so wie dies auch bei Wursthüllen üblich ist. Das Tierfutter 11 in der inneren Verpackung 10 kann zunächst mittels Hochdrucks behandelt und anschließend tiefgefroren werden.

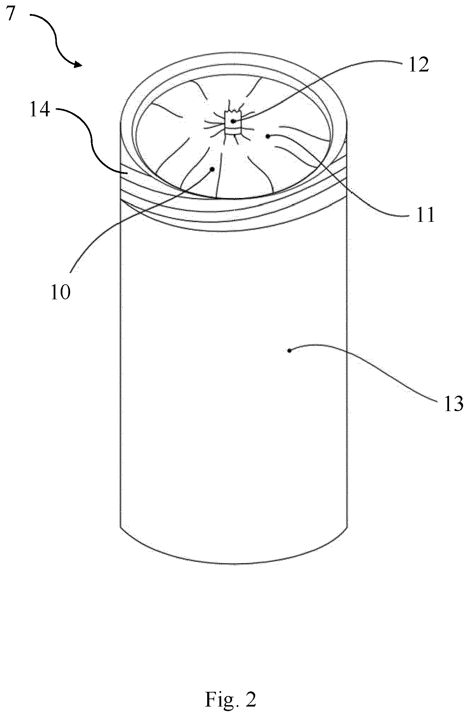

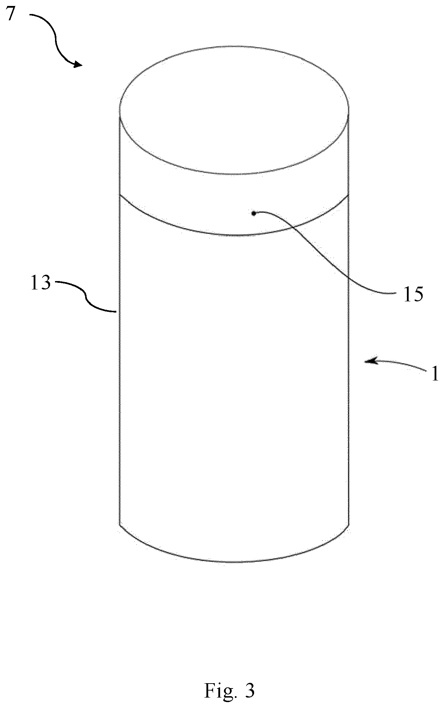

Nachfolgend wird unter Bezugnahme auf die Figuren 2 und 3 die äußere Verpackung 13 beschrieben, in der die in Figur 1 dargestellte innere Verpackung 10 aufbewahrt werden kann. Es kann sich bei dieser äußeren Verpackung 13 um einen etwa zylindrischen, länglichen und formstabilen (starren) Behälter mit einem Behälterboden an der Unterseite handeln, so dass der Behälter vorzugsweise standfest ist. Die äußere Verpackung 13 ist in der Figur 2 oberseitig offen dargestellt, da der Deckel 15 hier abgenommen wurde. Dadurch kann man erkennen, dass die zuvor anhand von Figur 1 beschriebene beutelartige innere Verpackung 10, in der sich das Tierfutter 11 befindet, von oben her in den starren äußeren Behälter 13 hineingeschoben werden kann, so dass die innere Verpackung vollständig in die äußere Verpackung 13 hineinpassen kann, wobei es vorzugsweise so ist, dass die beutelartige innere Verpackung 10 die starre äußere Verpackung 13 weitgehend vollständig ausfüllt. Bei oben offener äußerer Verpackung 13 kann somit die beutelartige innere Verpackung 10 nach dem Öffnen von oben her zugänglich sein, so dass gegebenenfalls Tierfutter 11 aus der inneren Verpackung 10 entnommen werden kann, ohne diese aus der äußeren Verpackung 13 herauszunehmen. Man sieht in Figur 2 außerdem, dass der Behälter, bzw. die äußere Verpackung 13 im oberen Endbereich außen ein Gewinde 14 aufweisen kann, so dass man auf dieses Gewinde 14 einen Deckel 15 aufschrauben kann.

Nachfolgend wird auf die Figur 3 Bezug genommen. Diese zeigt den starren Behälter, der als äußere Verpackung 13 dient, in einem verschlossenen Zustand. Zum Verschließen kann ein Deckel 15 auf das in Figur 2 erkennbare Schraubgewinde 14 aufgeschraubt werden, so dass der Behälter, bzw. die äußere Verpackung 13, nun insbesondere dicht, bzw. luftdicht, verschlossen ist. Zur Entnahme von Tierfutter 11 genügt es insbesondere, den Deckel 15 abzuschrauben und die beutelartige innere Verpackung 10 im oberen Bereich zu Öffnen (siehe auch Figur 2), so dass das Tierfutter 11 aus dem Inneren der inneren Verpackung 10 entnommen werden kann. Anschließend kann man die beutelartige innere Verpackung 10 wieder verschließen und den Deckel 15 auf den äußeren Behälter, bzw. die äußere Verpackung 13, aufschrauben. Auf diese Weise erhält man insbesondere eine geschlossene Verpackungsanordnung 1, die standfest ist und in einen Kühlschrank hineingestellt werden kann. In dieser geschlossenen Verpackungsanordnung 1 kann man das Tierfutter auch nach dem Anbruch der inneren beutelartigen Verpackung 10 über einen gewissen Zeitraum hygienisch aufbewahren. Innerhalb der auf Figur 3 nicht sichtbaren, inneren Verpackung 10, welche innerhalb der äußeren Verpackung 13 angeordnet ist, kann ein Tierfutter 11 vorliegen, welches auf Figur 3 ebenfalls nicht sichtbar ist, sodass auf Figur 3 ebenfalls das Tierfutterprodukt 7 dargestellt ist.

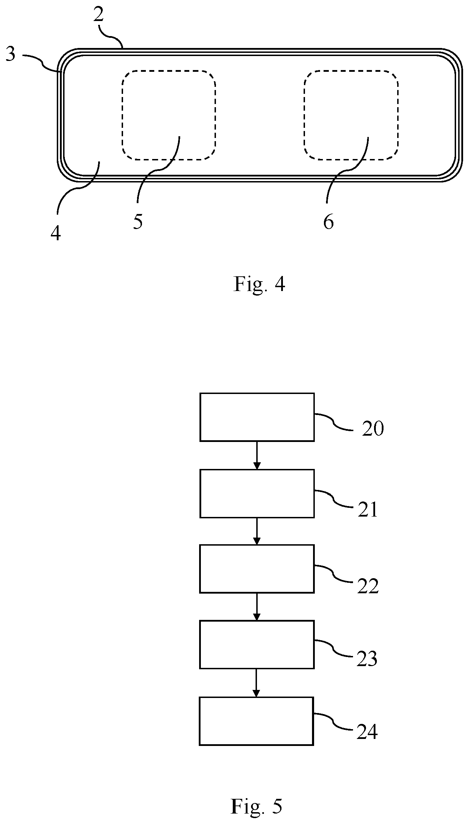

Figur 4 zeigt schematisch eine mit biologisch artgerechtem Hundefutter 4 gefüllte Wursthülle 2. Die Wursthülle 2 kann als innere Verpackung 10 dienen. Ferner dargestellt ist, dass die Wursthülle 2 eine Verbundfolie 3 umfasst. Das biologisch artgerechte Hundefutter 4 umfasst, wie durch die gestrichelten Rechtecke dargestellt, Fleisch 5 und Knochen 6.

Figur 5 beschreibt schematisch den Ablauf eines erfindungsgemäßen Verfahrens. In einem ersten Verfahrensschritt 20 wird die mit Tierfutter 11 gefüllte, innere Verpackung 10 einer Hochdruckbehandlung unterzogen. Anschließend wird in einem zweiten Verfahrensschritt 21 die Verpackungsanordnung 1 mit der hochdruckbehandelten inneren Verpackung 10 tiefgekühlt. In einem dritten Verfahrensschritt 22 wird die Verpackungsanordnung 21, beispielsweise um ein Tier zu füttern, aufgetaut und in einem vierten Verfahrensschritt 23 angebrochen. Nach Anbruch wird in einem fünften Verfahrensschritt 24 die innere Verpackung 10, vorzugsweise luftdicht eingeschlossen, in der äußeren Verpackung 13 aufbewahrt. Die Aufbewahrung der Verpackungsanordnung 1 kann beispielsweise in einem Kühlschrank erfolgen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Verpackungsanordnung
- 2: Wursthülle
- 3: Verbundfolie
- 4: Biologisch artgerechtes Hundefutter
- 5: Fleisch
- 6: Knochen
- 7: Tierfutterprodukt

- 10: Innere Verpackung
- 11: Tierfutter
- 12: Verschlusselemente
- 13: Äußere Verpackung
- 14: Gewinde
- 15: Deckel

- 20: Erster Verfahrensschritt
- 21: Zweiter Verfahrensschritt
- 22: Dritter Verfahrensschritt
- 23: Vierter Verfahrensschritt
- 24: Fünfter Verfahrensschritt

## Patentansprüche

1. Verfahren zur Haltbarmachung und Aufbewahrung von Tierfutter (11), bei dem dieses einer Hochdruckbehandlung in einer inneren Verpackung (10) in Form einer Wursthülle (2) unterzogen wird, **dadurch gekennzeichnet, dass** die innere Verpackung (10) eine Verbundfolie (3) umfasst, wobei die Verbundfolie (3) wenigstens zwei Folien aus unterschiedlichen Materialien aufweist.

2. Verfahren zur Haltbarmachung und Aufbewahrung von Tierfutter (11) nach Anspruch 1, **dadurch gekennzeichnet, dass** die Verbundfolie (3) wenigstens eine Folie aus Polyamid und wenigstens eine Folie aus Polyethylen umfasst.

3. Verfahren zur Haltbarmachung und Aufbewahrung von Tierfutter (11) nach einem der Ansprüche 1 oder 2, **dadurch gekennzeichnet, dass** das Tierfutter (11) in frischem Zustand der Hochdruckbehandlung unterzogen und anschließend tiefgekühlt wird.

4. Verfahren zur Haltbarmachung und Aufbewahrung von Tierfutter (11) nach einem der Ansprüche 1 bis 3, **dadurch gekennzeichnet, dass** die innere Verpackung (10) in einen starren Behälter eingelegt wird, der als äußere Verpackung (13) dient und die gefüllte innere Verpackung (10) formschlüssig aufnimmt.

5. Verfahren zur Haltbarmachung und Aufbewahrung von Tierfutter (11) nach Anspruch 4, **dadurch gekennzeichnet, dass** der als äußere Verpackung (13) dienende starre Behälter einen Deckel (15), vorzugsweise einen Schraubdeckel, aufweist, um die äußere Verpackung (13) mit dem Deckel (15) reversibel, vorzugsweise luftdicht, zu verschließen.

6. Verfahren zur Haltbarmachung und Aufbewahrung von Tierfutter (11) nach einem der Ansprüche 4 oder 5, **dadurch gekennzeichnet, dass** die innere Verpackung (10) vor oder nach dem Auftauen und insbesondere nach dem Anbruch der inneren Verpackung (10) in dem starren Behälter aufbewahrt wird.

7. Verfahren zur Haltbarmachung und Aufbewahrung von Tierfutter (11) nach einem der Ansprüche 1 bis 6, **dadurch gekennzeichnet, dass** dieses für biologisch artgerechtes Hundefutter (4) angewandt wird, welches Fleisch (5) und Knochen (6) umfasst.
